# FASCICULE DE BREVET EUROPEEN

(11) **EP 1 108 249 B1**
(45) Date de publication et mention de la délivrance du brevet: **01.09.2010**
(21) Numéro de dépôt: 00946036.1
(22) Date de dépôt: 29.06.2000
(51) Int. Cl.: G07F 7/10, G06F 11/00

(54) **PROCEDE DE SECURISATION DU TRAITEMENT D'UNE INFORMATION SENSIBLE DANS UN MODULE DE SECURITE MONOLITHIQUE, ET MODULE DE SECURITE ASSOCIE**
ABSICHERUNGSVERFAHREN FÜR DIE BEARBEITUNG EINER SICHERHEITSRELEVANTEN INFORMATION IN EINEM MONOLITISCHEN SICHERHEITSMODUL, UND ENTSPRECHENDES SICHERHEITSMODUL
METHOD FOR MAKING SECURE A SENSITIVE INFORMATION PROCESSING IN A MONOLITHIC SECURITY MODULE, AND ASSOCIATED SECURITY MODULE

(30) Priorité: 30.06.1999 FR 9908409
(43) Date de publication de la demande: 20.06.2001
(73) Titulaire: CP8 TECHNOLOGIES, 92190 Meudon Cedex (FR)
(72) Inventeur: HAZARD, Michel, F-78124 Mareil sur Mauldre (FR)
(74) Mandataire: Cassagne, Philippe M.J.
(86) Numéro de dépôt international: PCT/FR2000/001814
(87) Numéro de publication internationale: WO 2001/003084

(56) Documents cités:
- EP-A- 0 483 978
- EP-A- 0 526 055
- FR-A- 2 594 573
- FR-A- 2 612 316
- FR-A- 2 720 173

## Description

La présente invention concerne un procédé et un dispositif pour accroître la sécurité d'un module de sécurité monolithique comprenant un microprocesseur et agencé pour exécuter un programme à sécuriser. Un programme à sécuriser est un ensemble d'instructions dont l'exécution doit répondre à des critères tels que : authentification de l'utilisateur, confidentialité des données échangées, authenticité d'une transaction et sa validité, de façon générale, le traitement de données d'applications dans lesquelles des droits et obligations d'un usager sont contrôlés. La présente invention vise à doter le module de sécurité de moyens de détection et de parade contre des interventions extérieures frauduleuses pour accéder à des données sensibles, par contournement de contrôles préalables connus en eux-mêmes.

Le terme « module de sécurité » monolithique recouvre tout circuit électronique constitué d'une seule puce électronique et enrobé dans une enceinte, le circuit comprenant une unité de traitement, au moins une mémoire et des périphériques tels que des circuits d'entrée/sortie, contrôleur d'interruptions, etc.... Le module de sécurité peut prendre l'aspect d'un circuit intégré ou d'un objet portatif du type carte à puce utilisée par exemple, dans le domaine bancaire, dans les radiotéléphones mobiles, les décodeurs de télévision à péage, la santé, les transports.

Les modules de sécurité selon l'invention comportent au moins un microprocesseur, une mémoire contenant un programme et des moyens d'entrée/sortie pour communiquer avec l'extérieur. La mémoire contient au moins un programme d'application qui peut être inscrit dans une mémoire de type ROM lors de la fabrication du circuit, ou écrit par la suite dans une mémoire programmable. De façon générale, le programme contient les instructions exécutées par le microprocesseur, le transfert des instructions de la mémoire morte ou non volatile au microprocesseur s'effectuant par un bus de données couplé à un bus d'adresses. Si les chemins de bus sont trop longs, le constructeur du circuit dispose des circuits amplificateurs aux extrémités des bus afin que le signal binaire puisse se propager correctement sur toute sa longueur.

Les circuits amplificateurs exigent une forte impédance d'entrée ce qui les rend sensibles aux perturbations extérieures. Soumis à un rayonnement de particules élémentaires, ils peuvent se saturer pendant un certain temps et, quelle que soit la donnée en entrée, n'émettre sur le bus que 0 volt ou +Vcc, c'est-à-dire un "0" ou un "1" binaire. Un tel rayonnement peut être constitué de rayons alpha, X, d'ions chargés positivement ou négativement selon que l'on veut une sortie de l'amplificateur à "0" ou "1".

Un fraudeur en possession d'une carte authentique peut essayer de déjouer les dispositifs de sécurité afin de profiter de services de façon abusive : il va donc soumettre le module de sécurité à de tels rayonnements en espérant perturber son fonctionnement à son avantage. La source d'émission peut être suffisamment courte pour ne perturber l'exécution que d'une ou plusieurs instructions. Cette perturbation peut substituer à la valeur lue dans la mémoire du programme, une autre valeur imposée par l'émission du rayonnement. Ainsi, le déroulement du programme est différent et le fraudeur peut en tirer avantage.

Une première parade à ce type d'attaque est d'installer des capteurs de rayonnement, dès que ceux-ci détectent un rayonnement anormal, ils positionnent un drapeau qui peut être lu par le programme. Une telle solution est décrite dans le brevet US 5.465.349, équivalent américain du brevet FR 2 668 274. Mais les fraudeurs ont amélioré les moyens d'investigation et utilisent des émetteurs de rayonnement extrêmement fins. En pointant le rayonnement uniquement sur les amplificateurs ou un groupe d'amplificateurs, les capteurs ne détectent plus la fraude. En tout état de cause, cette parade est incapable de détecter une intervention à l'aide de micro-pointes et, de toute façon, on peut perturber la séquence de lecture des capteurs pour que le programme s'exécute comme si rien d'anormal n'était détecté.

L'invention vise à détecter des altérations dans la transmission des instructions et des données entre une mémoire et un microprocesseur. Le problème que vise à résoudre l'invention est la détection d'une intervention extérieure visant à perturber le déroulement d'un programme en modifiant la valeur des signaux échangés sur les bus d'un micro-contrôleur.

Le problème est résolu selon l'invention en prévoyant des mesures permettant aux modules de sécurité de vérifier si les informations transitent correctement au sein du module et si les programmes ont été exécutés intégralement. Dans la négative, l'exécution normale du programme est interrompue. De façon optionnelle, toute utilisation ultérieure du module est interdite car le module s'est rendu compte qu'il est utilisé de façon illicite.

Plus précisément, l'invention revendique un procédé de sécurisation du traitement d'une information sensible dans un module de sécurité de structure monolithique, le module comportant des moyens de traitement de l'information et des moyens de mémorisation d'informations susceptibles d'être traitées par lesdits moyens de traitement, **caractérisé en ce qu**'il comprend les étapes suivantes :
- sélectionner une information sensible dans les moyens de mémorisation ;
- déterminer une condition particulière d'intégrité de la dite information ;
- lire l'information et la transmettre aux moyens de traitement ;
- contrôler lors du traitement de l'information que la condition particulière est satisfaite ;
- bloquer le traitement de l'information au cas où la condition particulière n'est pas satisfaite.

D'autres caractéristiques et avantages de l'invention apparaîtront au cours de la description suivante de quelques modes de réalisation préférés mais non limitatifs, en regard des dessins annexés, sur lesquels :
La figure 1 représente le schéma d'un système classique à microprocesseur.
La figure 2 montre le jeu d'instructions du microprocesseur MOTOROLA 6805.
La figure 3 montre le jeu modifié d'instructions du microprocesseur selon l'invention.
La figure 4 montre le schéma synoptique du circuit modifié selon l'invention.
La figure 5 montre une partie du schéma synoptique du circuit modifié selon une amélioration de l'invention.
La figure 6 montre une partie de la mémoire de programme dotée d'étapes de mise à jour et de modification d'un indicateur permettant de détecter des perturbations extérieures.
La figure 7 montre une partie de la mémoire de programme selon une variante de l'invention.

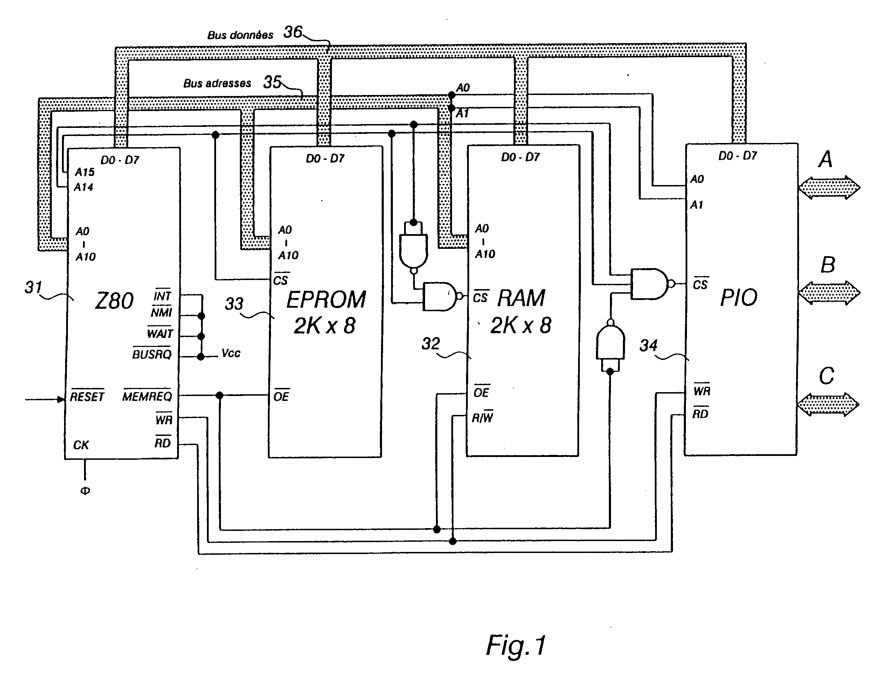

Le schéma électronique d'un système à microprocesseur est représenté à la figure 1. Ce schéma est extrait du livre « Architecture de l'Ordinateur » de Andrew TANENBAUM, publié par InterEditions. Le système comprend de façon connue en soi les éléments suivants : un microprocesseur 31, une mémoire RAM 32, une mémoire de programme EPROM 33 qui contient le programme exécutable et des moyens d'entrée/sortie 34. Les connexions de ces divers éléments s'effectuent par deux bus, le bus d'adresses 35 et le bus de données 36. On a coutume de désigner par « bus de contrôle » le bus qui véhicule l'ensemble des signaux tels que les signaux d'horloge, les signaux de lecture et d'écriture,....

Selon l'opération exécutée, ces éléments peuvent être en mode réception d'informations ou en mode émission d'informations. Lorsque le microprocesseur lit une instruction dans un octet à une certaine adresse, les huit cellules de la mémoire ROM constituant l'octet correspondant à cette adresse, émettent la valeur inscrite dans les cellules à travers le bus de données qui la transmet au microprocesseur, ce dernier étant en mode réception. Inversement, lorsque le microprocesseur émet une donnée vers la mémoire, le bus de données est alors en mode émission. Le fonctionnement interne du composant est détaillé dans le brevet US 4.382.279 équivalent américain du brevet FR 2 461 301 .

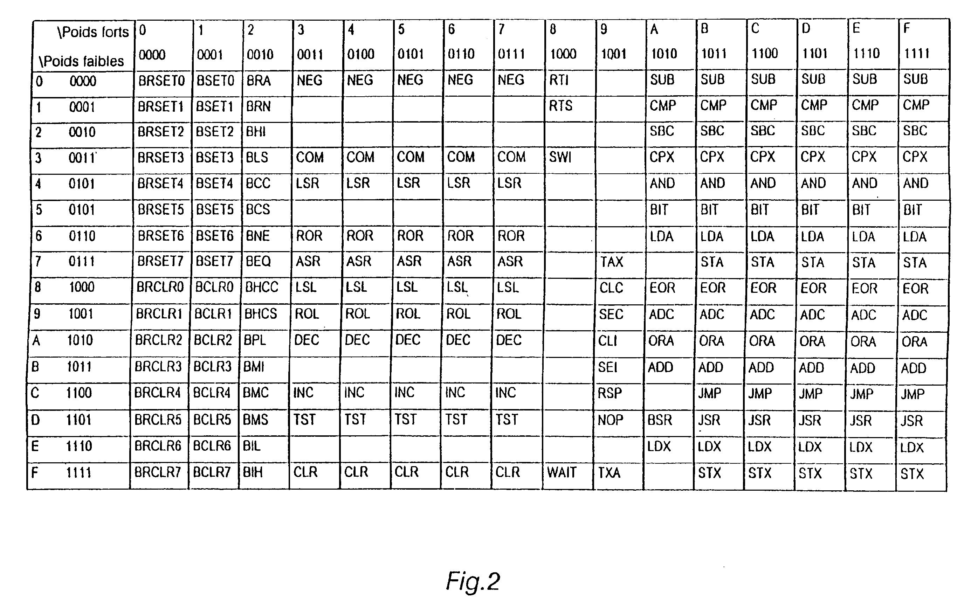

Chaque microprocesseur possède un jeu spécifique d'instructions. Le microprocesseur MOTOROLA 6805 traite des données de huit bits en interne. Son bus de données comprend 8 lignes et le code opération de ses instructions est codé sur 8 bits.. A titre d'exemple, le jeu d'instructions du microprocesseur M6805 et M1468805 extrait de la documentation « Microcomputer/microprocessor User's manual » est représenté à la figure 2. Une instruction pour ce type de microprocesseur est codée sur 8 bits, donc il existe 256 codes différents mais ceux-ci ne sont pas tous exécutables par le microprocesseur. Certains codes ne sont pas implémentés et correspondent à des trous dans le tableau de la figure 2, par exemple les codes : 90H, 31H, 41H, 51H, 61H, 71H, 91H, 23H, 24H, 25H, 26H, 27H, 28H, 29H, 93H, 94H, etc... Si le microprocesseur lit un code opération non implémenté, son exécution n'est pas garantie. Ainsi, le microprocesseur peut passer à l'instruction suivante sans rien faire d'autre.

Comme on le constate sur la figure 2, le code "00" du jeu d'instructions du microprocesseur MOTOROLA 6805 correspond à l'instruction « BRSET0 » et le code "FF", à l'instruction « STX » en indexé. L'instruction « BRSET0 » occupe trois octets dans la mémoire de programme et s'exécute en dix cycles d'horloge, celui de l'instruction « STX » occupe un octet et s'exécute en cinq cycles d'horloge. Le microprocesseur possède un compteur ordinal contenant l'adresse de l'instruction dans la mémoire de programme qui est en cours d'exécution. Comme il a été dit en préambule, si un fraudeur envoie un rayonnement sur le bus, l'une ou l'autre de ces instructions sera exécutée à la place de celle effectivement lue dans la mémoire de programme. Dans le cas de l'instruction « BRSET0 », après son exécution, le compteur ordinal du microprocesseur est augmenté de trois unités et pointe donc trois octets plus loin dans la mémoire de programme. Pour l'instruction « STX », le compteur ordinal est augmenté d'une unité. En émettant le rayonnement pendant les dix coups d'horloge nécessaires à l'exécution du BRSET0, le microprocesseur va lire trois octets à «00», et traduire cela par « test si le bit 0 de l'octet 00 est à 1 et saut si c'est le cas ». A cause du rayonnement, la valeur 00 de l'octet à l'adresse 00 est lue, donc le saut ne va pas s'effectuer et le programme continue à l'instruction suivante. Ainsi, en soumettant le circuit à un rayonnement pendant un certain nombre de tops d'horloge, un fraudeur peut faire avancer artificiellement le compteur ordinal par sauts successifs de trois octets et empêcher l'exécution d'une séquence inscrite en mémoire de programme. Pour un microprocesseur de la famille 8051, fabriqué par la société INTEL et de nombreuses autres sociétés, le code opération dont la valeur binaire est 00 correspond à l'instruction NOP qui signifie « no operation ». Cette instruction n'utilise qu'un seul octet. Dans ce cas, le fraudeur peut faire avancer artificiellement le compteur ordinal octet par octet.

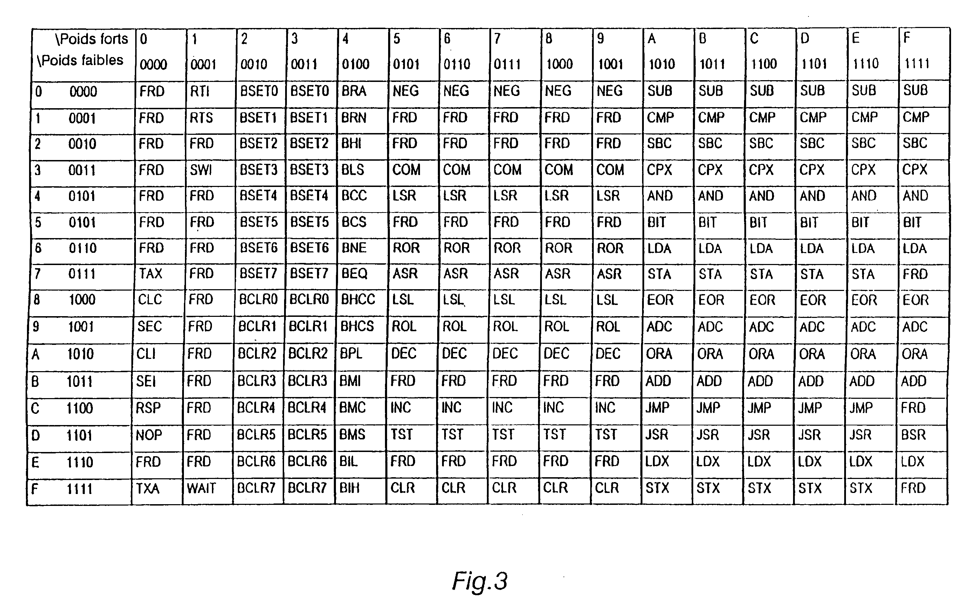

Une première solution consiste à interrompre le fonctionnement normal du microprocesseur lors d'une lecture d'instruction dont le code est « 00 » ou « FF ». Le module devient muet, seule une mise hors tension suivie d'une mise sous tension du module peut faire repartir le microprocesseur. La figure 3 montre le jeu modifié d'instructions selon l'invention. La nouvelle instruction correspondant à « 00 » ou « FF » est appelée « FRAUDE » ou FRD en abrégé. Par rapport au jeu d'instructions normal décrit sur la figure 2, des colonnes ont été inversées de telle sorte que les codes « 00 » et « FF » ne correspondent plus à des instructions exécutables. La colonne numéro « 0 » qui contenait l'instruction « BRSET0 » est transférée à la colonne 2, la colonne numéro « F » qui contenait l'instruction « STX » est transférée à la colonne A. Le transfert des colonnes est fait en modifiant le masque du circuit, dans l'élément qui décode les quatre bits de poids forts du code opération des instructions. On aurait aussi pu modifier le décodage des quatre bits de poids faible du code opération, mais ce n'était pas nécessaire pour ce modèle de microprocesseur.

Le programme ne contient pas d'instruction « FRAUDE ». Le programmeur qui écrit un programme d'application, prend soin de ne pas implémenter de telles instructions dans son programme.

Comme le montre la figure 3, la solution peut être généralisée à tous les codes opérations qui ne correspondent pas à une instruction reconnaissable par le microprocesseur. Ainsi, la nouvelle instruction « FRAUDE » est affectée à tous les codes non utilisés tels que : 01H, 02H, 03H, 04H, 05H, 06H, 0EH, 12H, 14H, 15H, 16H, 17H, 18H, 19H, 1AH, ...etc jusqu'à FFH, en tout 47 codes opération différents qui exécutent tous la même instruction « FRAUDE ».

Selon une variante, cette interruption déclenche une instruction microprogrammée dans le microprocesseur. Ce type d'instruction exécute une opération non réversible du type écriture d'un code en mémoire non volatile. Lors d'une prochaine mise sous tension, le circuit de gestion de la remise à zéro teste la valeur de ce code en mémoire non volatile et bloque le fonctionnement du microprocesseur. L'instruction microprogrammée déclenche une opération de blocage définitif du circuit. Les instructions microprogrammées ont l'avantage d'être résidentes dans le coeur du microprocesseur et donc, leur exécution ne peut être ni interrompue, ni altérée par un rayonnement agissant sur le bus. Il n'est donc pas possible de détecter l'exécution d'une instruction microprogrammée de blocage.

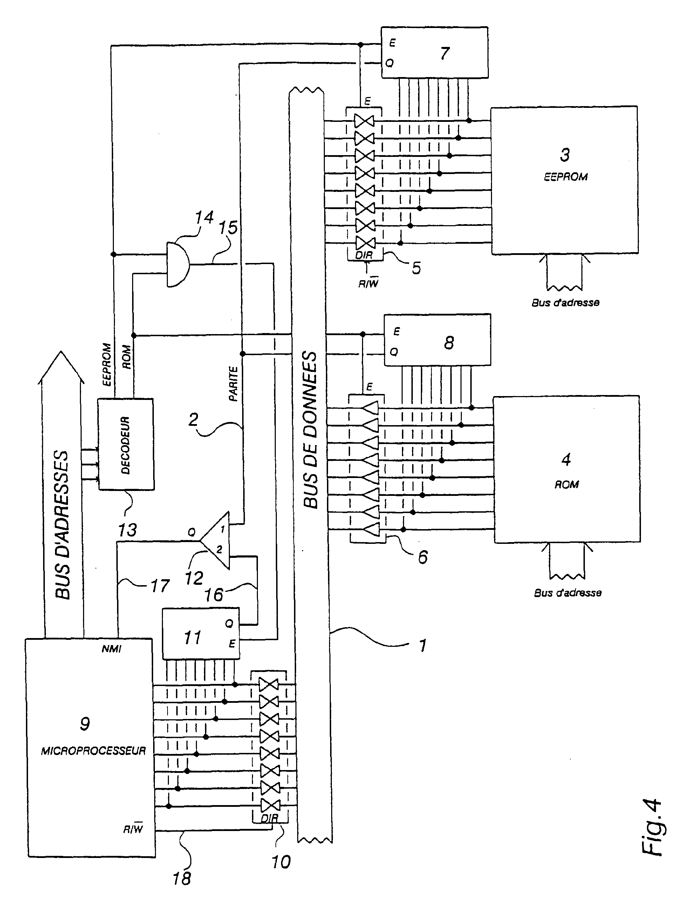

Une seconde solution permettant de détecter la perturbation d'une donnée sur un bus est d'implémenter un contrôle d'intégrité d'un bout à l'autre des bus. La figure 4 montre le schéma électronique avec son contrôleur d'intégrité de bus.

On rajoute aux huit lignes du bus de données 1 une neuvième ligne, notée PARITE 2 dont l'état logique correspond à la valeur de la parité calculée à partir des huit informations binaires présentes sur le bus de données. On a dit précédemment que les codes opération des diverses instructions d'un programme sont lus à partir de la mémoire ROM 3 ou de la mémoire programmable non volatile 4, EEPROM par exemple. Le signal de sortie d'une cellule de mémoire, dont la valeur représente la donnée binaire mémorisée par cette cellule, est trop faible pour atteindre le microprocesseur via le bus de donnée. Pour que ces signaux parviennent au microprocesseur, des circuits amplificateurs 5 et 6 sont installés juste après les cellules des mémoires EEPROM et ROM et avant le bus. Ces deux circuits ont une entrée de contrôle E qui permet d'activer leur sortie. Si le signal E a un niveau « 1 », les huit sorties ne sont pas actives. Elles sont dans un état haute impédance. La mémoire EEPROM étant accessible en écriture et en lecture, le cicuit amplificateur 5 est bidirectionnel. Le sens de transfert des données est contrôlé par le microprocesseur par la ligne de contrôle READ/WRITE 18).

Les moyens de contrôle de l'intégrité de la donnée lue des cellules mémoires comprennent des générateurs de parité 7, 8 et 11, un comparateur 12 et une entrée d'interruption non masquable appelée « NMI » reliée au microprocesseur. Les générateurs de parité 7, 8 et 11 calculent la valeur de la parité de la donnée présente sur huit entrées. A titre d'exemple, le circuit 74HC280 fabriqué par National Semiconductor est un générateur de parité disponible sous la forme d'un circuit intégré. Sa structure est parfaitement intégrable au sein du circuit monolithique. Les générateurs de parité possèdent également une ligne de sortie Q dont l'état représente la valeur de la parité de la donnée appliquée sur les huit entrées et une ligne de contrôle E qui active la sortie Q lorsqu'on lui applique 0 volt. Dans ce cas, la ligne de sortie Q est à 0 volt si le nombre d'entrée à +Vcc est pair, soit à +Vcc si le nombre d'entrée à +Vcc est impair. Lorsque l'on applique +Vcc à l'entrée E, la ligne de sortie Q est dans un état haute impédance. Le générateur de parité 7 calcule la parité de la donnée sélectionnée dans la mémoire EEPROM, le générateur de parité 8 calcule la parité de la donnée sélectionnée dans la mémoire ROM et le générateur de parité 11 calcule celle présente dans le microprocesseur.

Le microprocesseur 9 possède aussi un circuit amplificateur 10 pour assurer la compatibilité des signaux transitant sur les bus de données, d'adresse et de contrôle. Ce circuit amplificateur relié au bus de données 10 est bidirectionnel ; d'un côté, il amplifie les signaux de données que le microprocesseur envoie aux mémoires et aux périphériques, de l'autre côté il amplifie les signaux reçus par ces mêmes mémoires et périphériques afin que ces signaux soient traités correctement par les circuits internes du microprocesseur. La plupart des microprocesseurs ont un dispositif de pré-lecture (« fetch » en anglais) qui permet dans le même cycle d'horloge d'exécuter une instruction et de lire le code opération de l'instruction suivante.

Le microprocesseur 9 contrôle le bus d'adresses, la valeur appliquée sur ce bus détermine quel type de périphérique est sélecté. Pour diminuer le nombre de lignes de sélection, un décodeur d'adresse 13 reçoit en entrée le bus d'adresses et sélectionne les différents périphériques et mémoires par des lignes spécialisées : la ligne appelée « EEPROM » sélectionne la mémoire EEPROM et, la ligne « ROM », la mémoire ROM. Chacune de ces deux lignes est reliée à la mémoire et au générateur de parité correspondant.

Les lignes EEPROM et ROM sont actives à l'état 0. La sortie de la porte ET 14 génère un signal de sélection commune des deux mémoires, si une des deux lignes EEPROM ou ROM est à « 0 », la ligne 15 est aussi à « 0 ». La ligne 15 est reliée à l'entrée E du générateur de parité 11 qui, de ce fait, est actif en même temps que l'un ou l'autre des générateurs de parité 7 ou 8. Si aucune mémoire n'est sélectée, les lignes 2 et 16 de sortie des générateurs sont à l'état haute impédance. Les lignes 2 et 16 de sortie des générateurs sont reliées respectivement à chacune des deux entrées du comparateur 12. La sortie Q du comparateur est reliée à une entrée d'interruption du microprocesseur (notée « NMI » sur la figure 4).

En utilisation, le microprocesseur lit un code opération représentatif d'une instruction dans la mémoire ROM. Il applique l'adresse du code sur le bus d'adresses ce qui rend actifs la ligne ROM et par voie de conséquence, les amplificateurs 6 et les générateurs de parité 8 et 11. Les amplificateurs envoient la donnée lue dans la mémoire ROM sur le bus de données, et le générateur de parité calcule la valeur de la parité de ladite donnée puis, envoie la valeur au comparateur 12 par la ligne PARITE 2. Le microprocesseur lit la donnée à travers les amplificateurs bidirectionnels 10. Le générateur de parité 11, activé par la ligne 15, calcule la valeur de la parité de la donnée lue par le microprocesseur et, l'envoie au comparateur par la ligne 16. Le comparateur 12 compare les deux valeurs : si elles sont égales, la sortie est au niveau « 1 », en cas de différence, la sortie est à « 0 ». Dans ce dernier cas, la donnée a subi une altération due très probablement à l'émission frauduleuse d'un rayonnement. La sortie du comparateur est reliée par la ligne 17 à l'entrée « NMI » du microprocesseur. Un niveau « 0 » déclenche une interruption non masquable qui provoque un déroutement du programme en cours vers une routine d'interruption. L'activation du comparateur peut être effectuée lors de la phase de pré-lecture ; ainsi, la génération d'interruption est parfaitement synchronisée avec l'horloge de séquencement du microprocesseur.

L'opération est identique lorsque le microprocesseur effectue une lecture de la mémoire EEPROM.

Dans un mode simplifié de l'invention, l'entrée « NMI » peut être assimilée à l'entrée RESET du microprocesseur. Lorsque l'entrée redevient inactive, le microprocesseur est débloqué et commence son programme de la même façon qu'une remise sous tension. Ainsi, une intervention extérieure ne peut contrôler le microprocesseur qui, tant qu'il est soumis à ce rayonnement, est bloqué.

Par rapport à la première solution qui vise à vérifier qu'un code opération est correctement lu, cette seconde solution offre l'avantage de contrôler tout type de donnée : des codes opérations ou des données. Des générateurs de parité peuvent également être installés sur le bus d'adresses de la même façon que pour le bus de données. Cette seconde solution offre donc aussi l'avantage de contrôler les signaux du bus d'adresses.

Dans une variante, un niveau « 0 » sur l'entrée « NMI » provoque l'exécution d'un microprogramme. Pour éviter les phénomènes transitoires, la reconnaissance du niveau du signal sur l'entrée « NMI » s'effectue lors d'une transition de l'horloge du microprocesseur, transition au cours de laquelle les données analysées par le comparateur de signaux de parité sont valides. Un programme classique de gestion d'interruption écrit dans la mémoire ROM aurait son exécution perturbée par le fraudeur. Par contre, selon l'invention, un microprogramme est résident dans le microprocesseur ; il ne fait pas appel à la lecture de données sur le bus ; son exécution ne peut donc être perturbée par un rayonnement agissant sur le bus. Le microprogramme, déclenché par l'application d'un niveau « 0 » sur l'entrée « NMI », effectue deux actions : la première est l'écriture d'un drapeau appelé « BLOQUE » dans la mémoire non volatile programmable, et la seconde est une remise à zéro du microprocesseur. L'écriture du drapeau BLOQUE est irréversible :, l'état de ce drapeau ne peut plus être modifié ni par le microprocesseur, ni par un moyen extérieur. Un circuit d'initialisation, activé lors des mises sous tension du module de sécurité, teste l'état du drapeau BLOQUE et bloque le microprocesseur dans un état de RESET permanent si le drapeau est écrit. Avantageusement, ce drapeau peut être réalisé par un fusible dont la fusion rend inutilisable le microprocesseur.

Si un fraudeur impose un niveau « 0 » à toutes les lignes du bus, y compris la ligne PARITE, le comparateur 12 ne détecte pas d'erreur. En effet, le nombre de lignes à « 0 » étant pair, le signal de parité doit être à « 0 » or, c'est justement à ce niveau que la ligne PARITE est forcée. Pour éviter cela et selon une variante de la seconde solution, on utilise le fait que les générateurs de parité ont généralement deux sorties, une pour générer une parité de type paire, l'autre pour générer une parité de type impaire.

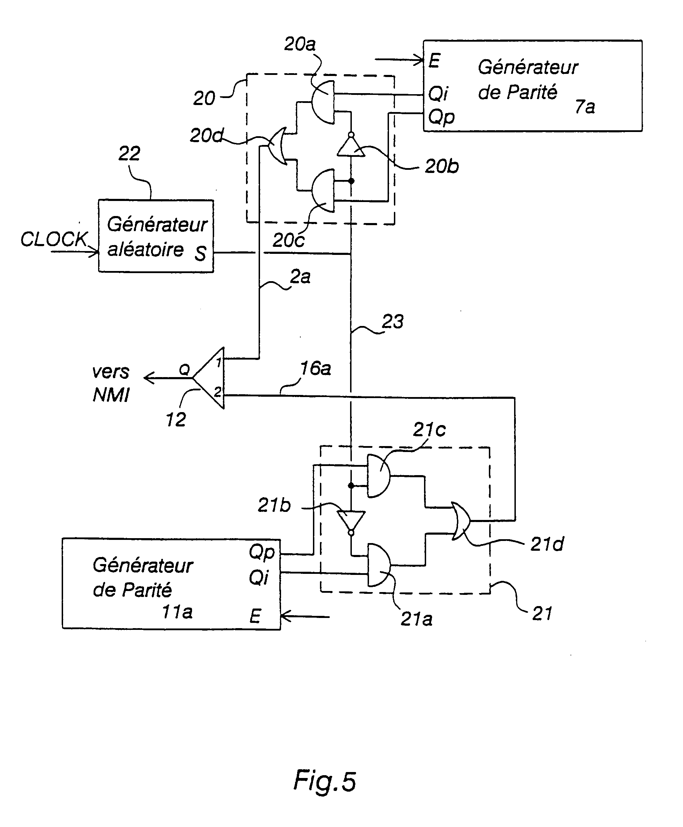

La figure 5 montre le schéma électronique des modifications à apporter à la figure 4 pour intégrer dans le circuit monolithique des circuits générateurs de parité programmable. Les éléments communs à la figure 4 et à la figure 5 portent les mêmes références.

Les générateurs de parité 7a, 8a et 11 a possèdent deux sorties : l'une notée Qp est la sortie du signal de parité paire, et l'autre Qi est la sortie du signal de parité impaire. Lorsque le nombre de lignes d'entrée à « 1 » est pair alors Qp est à « 1 » et Qi est à « 0 », lorsque le nombre de lignes d'entrée à « 1 » est impair alors Qi est à « 1 » et Qp est à « 0 »,. Les montages 20 et 21 constitués chacun de deux portes ET, d'une porte OU et d'une porte inverseuse constituent des multiplexeurs. Les deux entrées des multiplexeurs sont respectivement connectées aux deux sorties Qi et Qp des générateurs de parité. Une ligne de contrôle notée 23 sélectionne l'entrée. Si la ligne 23 est à « 0 », les sorties des portes 20c et 21 c sont à « 0 » et, à l'aide des portes inverseuses 20b et 20c, les sorties des portes 20a et 21 a ainsi que celles des portes 20d et 21d, reproduisent les niveaux logiques des sorties Qi des générateurs de parité 7a, 11a. Dans ce cas, les sorties Qi sont sélectionnées et les données présentes sur les sorties Qi sont envoyées au comparateur 12. Ce sont les signaux de parité impaire qui sont comparés. Si la ligne 23 est à « 1 », à l'aide des portes inverseuses 20b et 20c, les sorties des portes 20a et 21 a sont à « 0 », les sorties des portes 20c et 21 c, ainsi que celles des portes 20d et 21 d, reproduisent les niveaux logiques des sorties Qp des générateurs de parité 7a et 11 a. Dans ce dernier cas, les sorties Qp sont sélectionnées et les données présentes sur les sorties Qp sont envoyées au comparateur 12). Ce sont les signaux de parité paire qui sont comparés.

Les signaux de la ligne 23 sont envoyés par un générateur de signaux aléatoires 22). Ce générateur est un circuit électronique qui reçoit sur une ligne d'entrée l'horloge du microprocesseur et qui délivre un signal « 0 » et « 1 » de façon aléatoire dans le temps. De manière simplifiée, le générateur de signaux aléatoires peut être un compteur dont la sortie change d'état à chaque intervalle de temps déterminé. Le générateur de signaux aléatoires 22, le multiplexeur 21 et le comparateur 12 sont situés le plus près possible du microprocesseur, et de préférence intégrés à celui-ci. Ainsi, ils sont peu perturbés par un fraudeur émettant un rayonnement sur le bus. Des montages plus compliqués faisant appel à un oscillateur interne au générateur de signaux aléatoires peuvent être installés. Le but de ce générateur est d'émettre un signal logique sur une ligne dont l'état change assez souvent, de l'ordre de 100 à 10000 fois par seconde. Il est important de synchroniser les changements d'état de la ligne avec l'horloge du microprocesseur, ceci pour éviter de prendre en compte la ligne « NMI » au moment précis où le signal de la ligne 23 change, sinon il pourrait se produire des interférences dues aux différences de propagation des signaux.

En utilisation, Le fraudeur soumet le bus de données à un rayonnement qui force les bits de données et de parité à « 1 » ou à « 0 ». Selon la valeur binaire, la valeur de parité calculée à partir des bits de données forcées par le rayonnement peut être égale à la valeur forcée par le rayonnement donc, étant égale, on ne détecte pas d'erreur. En changeant souvent le type de parité grace au générateur de signaux aléatoires, on détecte à coup sûr la présence du rayonnement.

Lorsque le générateur de signaux aléatoires 22 émet un niveau « 0 », les signaux émis par les sorties Qi des générateurs de parité 7a et 11a sont sélectionnés et donc, on compare les signaux de parité de type impaire. Lorsque le générateur de signaux aléatoires 22 émet un niveau « 1 », les signaux émis par les sorties Qp des générateurs de parité7a et 11a sont sélectionnés et donc, les signaux de parité de type paire sont comparés.

Distinguons tout d'abord le cas où le bus est soumis à un rayonnement forçant les lignes du bus de données et de parité 2a à « 1 ». Lorsque le générateur de signaux aléatoires 22 envoie un signal « 0 », la sortie Qi du générateur de parité 11 est sélectionné, son niveau égal à « 0 » est différent de celui de la ligne de parité 2a qui est forcée à « 1 ». Le comparateur détecte donc bien ce type de rayonnement en déclenchant une interruption. Passons au deuxième cas où le bus est soumis à un rayonnement forçant les lignes du bus de données et de parité 2a à « 0 ». Lorsque le générateur de signaux aléatoires 2a2 envoie un signal « 1 », la sortie Qp du générateur de parité 11 est sélectionné, son niveau égal à « 1 » est différent de celui de la ligne de parité 2a qui est forcée à « 0 ». Dans ce cas également, le comparateur détecte le rayonnement et le signale au microprocesseur par une interruption.

Par cette variante, on ajoute un paramètre qui rend plus imprévisible encore le comportement du circuit pour un fraudeur, car ce paramètre augmente la difficulté de contrôler l'état des lignes de bus par l'extérieur sans que le circuit le détecte.

Une troisième solution pour détecter une altération de l'exécution d'un programme est d'implémenter des routines de modification de drapeaux de place en place au sein d'un programme à protéger,et de vérifier avant d'entreprendre une opération sur des données sensibles que tous les drapeaux ont été modifiés.

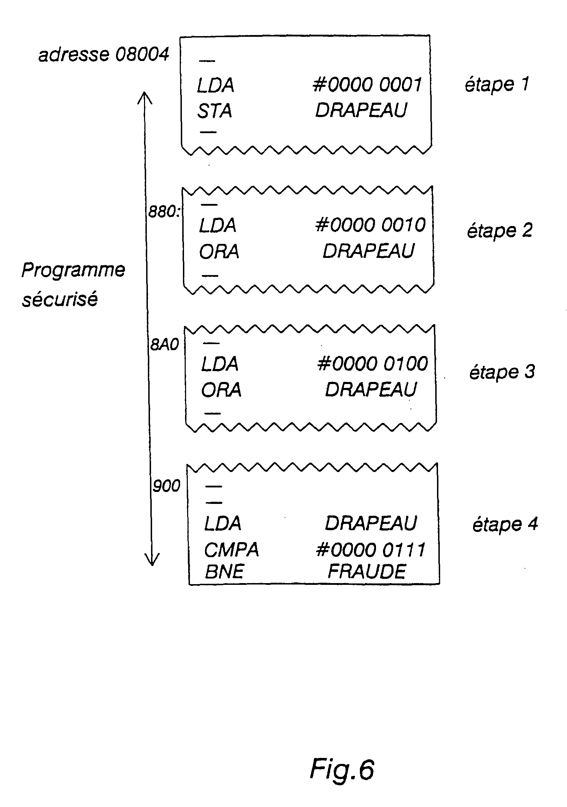

La figure 6 montre une partie de la mémoire contenant un programme implémenté à l'adresse 0800 hexadécimal. Cette mémoire peut être de la ROM ou de l'EEPROM, mais tout autre type de mémoire non volatile capable d'exécuter des instructions convient. Tous les drapeaux sont représentés par des bits et regroupés en mémoire dans un indicateur. Dans l'exemple décrit, cet indicateur est un octet de la mémoire RAM appelé DRAPEAU. Un certain nombre de bits composant cet octet sont utilisés pour marquer le passage à certaines étapes du programme qui mènent à une opération sur des données sensibles.

A l'adresse 800 (étape 1), l'octet DRAPEAU est mis à jour à la valeur binaire « 0000 0001 », le premier bit à « 1 » indiquant que l'étape 1 a été exécutée. A l'adresse 880H (étape 2), l'octet DRAPEAU est lu et modifié par l'exécution d'un OU logique (instruction ORA en MOTOROLA 6805) entre son contenu actuel et la valeur binaire « 0000 0010 » : le résultat de l'opération OU est écrit dans l'octet DRAPEAU. A l'adresse 8A0H (étape 3), l'octet DRAPEAU est lu et modifié par l'exécution d'un OU logique entre son contenu et la valeur binaire « 0000 0100 » : le résultat de l'opération OU est écrit dans l'octet DRAPEAU. Enfin, à l'adresse 900H (étape 4), la partie sécurisée du programme se termine : l'octet DRAPEAU est lu et contrôlé : si sa valeur est différente de la valeur binaire « 0000 0111 », le programme saute vers une routine de gestion de la fraude.

En utilisation, le programme à sécuriser commence à l'adresse 0800H. La première étape (étape 1) consiste à mettre à jour l'octet DRAPEAU en mettant à « 1 » le premier bit de l'octet DRAPEAU. Puis le programme continue en séquence jusqu'à une seconde étape dite de modification (étape 2) dans laquelle on positionne le second bit de l'octet DRAPEAU indiquant ainsi que l'étape 2 a été exécutée. Par voie de conséquence, on peut supposer que toutes les instructions du programme entre l'étape 1 et l'étape 2 ont été exécutées. Puis le programme continue en séquence jusqu'à l'étape de modification 3 où là, le troisième bit de DRAPEAU est mis à « 1 ». Enfin, le programme à sécuriser se termine par une routine de test de l'octet DRAPEAU (étape 4) : elle consiste à vérifier l'exécution des étapes 1,2 et 3. Si la valeur est différente de « 0000 0111 », un déroutement du programme est intervenu, ce qui révèle un fonctionnement anormal résultant très probablement d'une tentative de fraude. Dans ce cas, le programme interrompt son fonctionnement normal pour sauter vers la routine de gestion de la fraude. Un fraudeur ne connaissant pas les emplacements du programme où sont implémentées les routines de modification de l'octet DRAPEAU, il ne sait pas à quel moment elles s'exécutent et donc, en perturbant les valeurs du bus de données, il y a une forte probabilité pour qu'il réussisse à supprimer l'exécution d'au moins une des étapes 1,2 ou 3, et donc l'octet DRAPEAU n'aura pas la valeur finale attendue.

De façon simplifiée, la routine de gestion de la fraude peut consister en une remise à zéro du microprocesseur (RESET). Une amélioration consiste à utiliser pour l'étape 4 une instruction microprogrammée de telle sorte qu'un fraudeur ne pourrait perturber son déroulement en empêchant l'exécution de certaines instructions et en en autorisant d'autres. Cette instruction a la structure suivante « Code opération, Adresse à lire, Valeur à comparer » : elle exécute séquentiellement les fonctions suivantes :
① lecture de l'octet « Adresse »
② comparaison de la valeur de l'octet lue avec « Valeur »
③ si égal alors saut à l'instruction suivante
   sinon ④ écriture du drapeau BLOQUE en mémoire non volatile
   ⑤ RESET du microprocesseur

Bien évidemment, en augmentant le nombre de drapeaux et donc le nombre d'étapes de mise à jour de l'indicateur, on augmente les moments de détection des perturbations extérieures. L'indicateur DRAPEAU doit alors être représenté par plusieurs octets. Mais, les étapes de mise à jour de l'indicateur occupent de la place mémoire inutile pour le programme d'application, tant au niveau du programme qu'au niveau de la mémoire RAM. Il faut donc optimiser le nombre d'étapes. Par exemple, pour un programme à sécuriser de 1000 octets, un bon compromis serait d'installer 32 étapes de modification de l'indicateur. Ces 32 étapes et la routine de test final occupent 162 octets de mémoire de programme et 4 octets en RAM. Selon la complexité du programme, qui peut comporter des sauts et ne pas effectuer toutes les étapes de modification, le test de l'octet DRAPEAU peut ne prendre en compte qu'un nombre limité de bits. Si le programme à sécuriser se termine à des endroits différents, on peut installer dans le programme plusieurs routines de test qui prennent en compte des valeurs différentes de l'octet DRAPEAU.

Cette solution comporte l'avantage d'être facilement utilisable sur un composant classique car elle n'implique pas de modifier la partie matérielle du composant.

Un perfectionnement de l'invention consiste à implémenter dans le programme des instructions d'effacement de l'octet DRAPEAU à des emplacements qui ne sont normalement jamais atteints lors de l'exécution du programme. Ainsi, une perturbation frauduleuse de l'exécution du programme peut provoquer l'exécution d'une de ces instructions qui, en mettant à 00 l'octet DRAPEAU, entraîne l'exécution de la routine de gestion de la fraude.

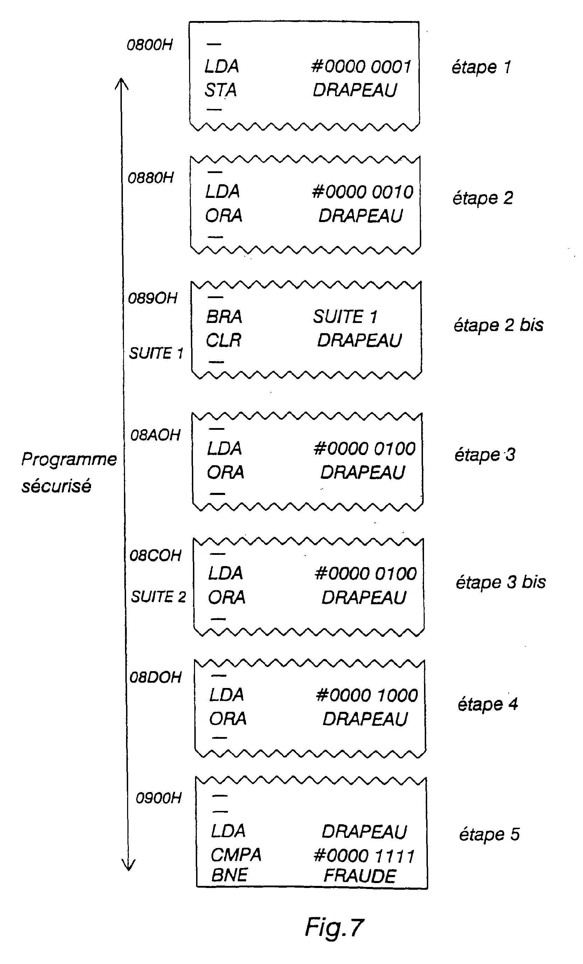

La figure 7 montre l'aspect de la mémoire de programme selon le perfectionnement. A l'adresse 0890H (étape 2bis), le programme exécute une instruction de saut inconditionnel. L'instruction à l'adresse suivante n'est donc jamais exécutée, sauf si une autre instruction de saut la spécifie comme destination. Le programmeur écrit une instruction d'effacement de l'octet DRAPEAU juste après l'instruction de saut inconditionnel, et prend bien soin de ne jamais la spécifier comme destination dans son programme. Si un fraudeur perturbe le bus de données, il y a un certain niveau de probabilité pour que l'instruction de saut inconditionnel ne soit pas exécutée et que cette instruction d'effacement le soit. Cette instruction met à « 0 » tous les bits de l'octet DRAPEAU. Lors du test final à l'étape 5, les bits 1 et 2 de DRAPEAU sont à « 0 » et donc la valeur lue n'est pas celle attendue. Le programme interrompt donc son fonctionnement normal pour sauter vers la routine de gestion de la fraude.

Le programme illustré par la figure 7 montre deux étapes d'effacement de l'octet DRAPEAU (étape 2 bis et 3 bis). L'instruction d'effacement n'occupe que deux octets en mémoire de programme, contre quatre octets pour les étapes de mise à jour de l'indicateur, ce qui, à performance égale, fait gagner de la place. Un programme optimal utilise assez peu d'instructions de saut inconditionnel. Il est donc possible de mettre systématiquement une instruction d'effacement après un saut inconditionnel.

## Revendications

1. Procédé de sécurisation du traitement d'une information sensible dans un module de sécurité de structure monolithique, le module comportant des moyens de traitement de l'information (31) et des moyens de mémorisation (32,33) d'informations susceptibles d'être traitées par lesdits moyens de traitement, **caractérisé en ce qu'**il comprend les étapes suivantes :
- sélectionner une information sensible dans les moyens de mémorisation ;
- déterminer une condition particulière d'intégrité de la dite information ;
- lire l'information et la transmettre aux moyens de traitement ;
- contrôler lors du traitement de l'information que la condition particulière est satisfaite ;
- bloquer le traitement de l'information au cas où la condition particulière n'est pas satisfaite.

2. Procédé selon la revendication 1, dans lequel l'information est un code opération lu dans les moyens de mémorisation (32,33), l'ensemble des codes opérations étant contenu dans une table ayant un contenu déterminé lors de la fabrication du module de sécurité, et la condition particulière d'intégrité est le fait que la valeur de l'information est égale à l'une de plusieurs valeurs fixes.

3. Procédé selon la revendication 2, dans lequel le code opération à traiter est codé sous forme de bits de données et lesdits bits n'ont pas tous la même valeur binaire.

4. Procédé selon la revendication 1, dans lequel la condition particulière d'intégrité consiste à contrôler une donnée d'intégrité calculée en utilisant l'information lue dans les moyens de mémorisation (32,33), la donnée d'intégrité étant calculée lors de la lecture de l'information et étant transmise aux moyens de traitement, les moyens de traitement calculant une autre donnée d'intégrité à partir des informations reçues et contrôlant l'égalité entre les deux données d'intégrité.

5. Procédé selon la revendication 4, dans lequel les données d'intégrité sont calculées à partir d'au moins une donnée de calcul dont la valeur varie en fonction du temps.

6. Procédé selon la revendication 4, dans lequel les données d'intégrité sont calculées à partir d'au moins une donnée de calcul dont la valeur varie de façon aléatoire.

7. Procédé selon la revendication 1, dans lequel le blocage du traitement de l'information est réalisé par une instruction microprogrammée.

8. Procédé selon la revendication 7, dans lequel l'instruction microprogrammée réalise les étapes suivantes :
- écrire une donnée de blocage dans un emplacement non volatile des moyens de mémorisation (32,33) ;
- bloquer le traitement de l'information.

9. Procédé selon la revendication 8, dans lequel, à la mise sous tension du module, un emplacement non volatile des moyens de mémorisation (32,33) est lu par les moyens de traitement (31), et le module est bloqué si une valeur lue à cet emplacement n'est pas conforme.

10. Module de sécurité constitué d'un circuit électronique de structure monolithique et comportant des moyens de traitement de l'information (31) et des moyens de mémorisation (32,33), les moyens de traitement sélectionnant des informations extraites des moyens de mémorisation afin de les traiter ; **caractérisé en ce que** les moyens de traitement comportent des moyens de contrôle d'une condition particulière d'intégrité d'une information sensible, et des moyens de blocage du traitement de l'information, lesdits moyens de blocage étant activés lorsque les moyens de contrôle ont détecté que la condition particulière n'est pas satisfaite.

11. Module de sécurité selon la revendication 10, dans lequel les moyens de traitement (31) exécutent des instructions correspondant à des codes opérations extraits d'une table, **caractérisé en ce que** la table comprend une valeur d'instruction interdite.

12. Module de sécurité selon la revendication 11, dans lequel le code opération à traiter est codé sous forme de bits de données, le module de sécurité comprenant un moyen de lecture des valeurs de tous les bits et un moyen de blocage activé lorsque les valeurs des bits sont toutes identiques.

13. Module de sécurité selon la revendication 10, dans lequel les moyens de traitement (31) exécutent des instructions correspondant à des codes opérations extraits d'une table, le module de sécurité comportant un moyen de lecture d'un code opération et un moyen de blocage activé lors de la lecture d'un code opération interdit.

14. Module de sécurité selon la revendication 13, dans lequel le moyen de blocage comprend un moyen d'écriture irréversible d'un indicateur dans les moyens de mémorisation (32,33), et un moyen de lecture dudit indicateur lors de la mise sous tension ultérieure du module.

15. Module de sécurité selon la revendication 10, comportant des générateurs de parité (7,8) coopérant avec les moyens de mémorisation, des générateurs de parité (11) coopérant avec le moyen de traitement et un comparateur relié à chacun des générateurs de parité et apte à provoquer une interruption au sein des moyens de traitement.

16. Module de sécurité selon la revendication 15, dans lequel les générateurs de parité (7,8) ont un fonctionnement qui varie en fonction du temps.

17. Module de sécurité selon la revendication 15, dans lequel les générateurs de parité (7,8) ont un fonctionnement qui varie aléatoirement.

18. Module de sécurité selon la revendication 14, **caractérisé en ce que** l'écriture irréversible de l'indicateur dans les moyens de mémorisation (32,33) est réalisée en exécutant une instruction microprogrammée.

19. Module de sécurité selon la revendication 10, **caractérisé en ce que** le module de sécurité est une carte à microcircuit.

## Claims

1. A method for securing the processing of sensitive information in a security module with a monolithic structure, where the module comprises information processing means (31) and means (32,33) to store the information that can be processed by the said processing means, **characterised in that** it comprises the following steps:
- selecting a sensitive piece of information in the storage means;
- determining a particular condition for the integrity of the said information;
- reading the information and transmitting it to the processing means;
- verifying, while the information is processed, that the particular condition has been met;
- blocking the processing of the information if the particular condition is not met.

2. A method according to claim 1, where the information is an operation code read in the storage means (32,33), where all the operation codes are contained in a table with content determined while manufacturing the security module, and the particular condition of integrity is the fact that the value of the information is equal to one of several fixed values.

3. A method according to claim 2, where the operation code to process is encoded in the form of data bits and where the said bits do not all have the same binary value.

4. A method according to claim 1, where the particular condition for integrity consists in verifying a piece of integrity data calculated using the information read from the storage means (32,33), where the piece of integrity data is calculated while reading the information and transmitted to the processing means, and where the processing means calculate another piece of integrity data from the information received and check if the two pieces of integrity data are equal.

5. A method according to claim 4, where the integrity data are calculated from at least one piece of calculation data, the value of which is variable depending on the time.

6. A method according to claim 4, where the integrity data are calculated from at least one piece of calculation data, the value of which is randomly variable.

7. A method according to claim 1, where the processing of information is blocked by a microprogrammed instruction.

8. A method according to claim 7, where the microprogrammed instruction carries out the following steps:
- writing blocking data in a non-volatile location of the storage means (32,33);
- blocking the processing of information.

9. A method according to claim 8, where, when the power to the module is switched on, a non-volatile location of the storage means (32,33) is read by the processing means (31) and the module is blocked if a value read at the location is not conforming.

10. A security module made up of an electronic circuit with a monolithic structure comprising information processing means (31) and storage means (32,33), where the processing means select information extracted from the storage means in order to process it, **characterised in that** the processing means comprise means for verifying a particular condition for the integrity of a sensitive piece of information, and information processing blocking means, which blocking means are activated when the verification means detect that the particular condition has not been fulfilled.

11. A security module according to claim 10, where the processing means (31) execute instructions corresponding with operation codes extracted from a table, **characterised in that** the table comprises a forbidden instruction value.

12. A security module according to claim 11, where the operation code to be processed is encoded in the form of data bits, where the security module comprises means to read the value of all the bits and blocking means that are activated when the values of the bits are all identical.

13. A security module according to claim 10, where the processing means (31) execute instructions that correspond with operation codes extracted from a table, where the security module comprises the means to read an operation code and blocking means that are activated during the reading of a forbidden operation code.

14. A security module according to claim 13, where the blocking means comprise the means for irreversibly writing an indicator in the storage means (32,33) and the means to read the said indicator when the module is switched on a later time.

15. A security module according to claim 10, comprising parity generators (7,8) working with the storage means, parity generators (11) working with the processing means and a comparator connected to each parity generator and capable of leading to an interruption in the processing means.

16. A security module according to claim 15, where the parity generators (7,8) operate variably depending on the time.

17. A security module according to claim 15, where the parity generators (7,8) operate variably in a random manner.

18. A security module according to claim 14, **characterised in that** the irreversible writing of the indicator in the storage means (32,33) is carried out by executing a microprogrammed instruction.

19. A security module according to claim 10, **characterised in that** the security module is a microcircuit card.

## Patentansprüche

1. Absicherungsverfahren für die Bearbeitung einer sicherheitsrelevanten Information in einem monolithischen Sicherheitsmodul, wobei das Modul Informationsbearbeitungsmittel (31) und Speichermittel (32,33) für die Abspeicherung von mit den genannten Bearbeitungsmitteln bearbeitbaren Informationen aufweist, **dadurch gekennzeichnet, dass** es folgende Schritte umfasst
- Auswahl einer sicherheitsrelevanten Information in den Speichermitteln
- Festlegung einer besonderen Integritätsbedingung der genannten Information;
- Lesen der Information und Übermittlung an die Bearbeitungsmittel;
- Kontrolle bei der Informationsbearbeitung, ob die besondere Bedingung erfüllt ist:
- Sperrung der Informationsbearbeitung, falls die besondere Bedingung nicht erfüllt ist.

2. Verfahren nach Anspruch 1, bei welchem die Information ein in den Speichermitteln (32,33) gelesener Ablaufcode ist, wobei die gesamten Ablaufcodes in einer Tabelle aufgeführt sind, die am Zeitpunkt der Herstellung des Sicherheitsmoduls einen bestimmten Inhalt aufweist und die besondere Integritätsbedingung in der Tatsache besteht, dass der Wert der Information einem Wert unter mehreren Festwerten entspricht.

3. Verfahren nach Anspruch 2, bei welchem der zu bearbeitende Ablaufcode als Datenbits codiert ist und die genannten Bits nicht denselben Binärwert haben.

4. Verfahren nach Anspruch 1, bei welchem die besondere Integritätsbedingung in der Kontrolle einer Integritätsgröße besteht, die durch Einsatz der in den Speichermitteln (32,33) gelesenen Information berechnet wird, wobei die Integritätsgröße beim Lesen der Information berechnet und an die Bearbeitungsmittel übermittelt wird, wobei die Bearbeitungsmittel aus den erhaltenen Informationen eine weitere Integritätsgröße berechnen und die Gleichwertigkeit der zwei Integritätsgrößen kontrollieren.

5. Verfahren nach Anspruch 4, bei welchem die Integritätsgrößen aus mindestens einer Rechengröße berechnet werden, deren Wert in der Zeit ändert.

6. Verfahren nach Anspruch 4, bei welchem die Integritätsgrößen aus mindestens einer Rechengröße berechnet werden, deren Wert zufällig ändert.

7. Verfahren nach Anspruch 1, bei welchem die Sperrung der Informationsbearbeitung durch einen mikroprogrammierter Befehl durchgeführt wird.

8. Verfahren nach Anspruch 7, bei welchem der mikroprogrammierte Befehl folgende Schritte durchführt:
- Schreiben einer Sperrinformation in eine nicht flüchtige Stelle der Speichermittel (32,33);
- Sperrung der Informationsbearbeitung.

9. Verfahren nach Anspruch 8, bei welchem, beim Einschalten des Moduls, eine nicht flüchtige Stelle der Speichermittel (32,33) durch die Bearbeitungsmittel (31) gelesen, und das Modul gesperrt wird, falls ein an dieser Stelle gelesener Wert nicht stimmt.

10. Sicherheitsmodul, der aus einem monolithischen elektronischen Schaltkreis besteht und Informationsbearbeitungsmittel (31) sowie Speichermittel (32,33) aufweist, wobei die Bearbeitungsmittel aus den Speichermitteln gezogene Informationen auswählen, um sie zu bearbeiten;
**dadurch gekennzeichnet, dass** die Bearbeitungsmittel Mittel zur Kontrolle einer besonderen Integritätsbedingung einer sicherheitsrelevanten Information, sowie Mittel zur Sperrung der Informationsbearbeitung aufweisen, wobei die Sperrmittel dann aktiviert werden, wenn die Kontrollmittel ermittelt haben, dass die besondere Bedingung nicht erfüllt ist.

11. Sicherheitsmodul nach Anspruch 10, bei welchem die Bearbeitungsmittel (31) Befehle ausführen, die aus einer Tabelle gezogenen Ablaufcodes entsprechen, **dadurch gekennzeichnet, dass** die Tabelle einen verbotenen Befehlswert umfasst.

12. Sicherheitsmodul nach Anspruch 11, bei welchem der zu bearbeitende Ablaufcode als Datenbits codiert ist, wobei das Sicherheitsmodul ein Lesemittel zum Lesen der Werte der gesamten Bits und ein Sperrmittel umfasst, dass dann aktiviert ist, wenn die Werte der gesamten Bits identisch sind.

13. Sicherheitsmodul nach Anspruch 10, bei welchem die Bearbeitungsmittel (31) Befehle durchführen, die aus einer Tabelle gezogenen Ablaufcodes entsprechen, wobei das Sicherheitsmodul ein Lesemittel eines Ablaufcodes sowie eine Sperrmittel umfasst, dass dann aktiviert ist, wenn das Lesen eines Ablaufcodes verboten ist.

14. Sicherheitsmodul nach Anspruch 13, bei welchem das Sperrmittel ein unumkehrbares Schreibmittel, zum Schreiben eines Anzeigers in die Speichermittel (32,33), sowie ein Lesemittel, zum Lesen des genannten Anzeigers beim späteren Einschalten des Moduls umfasst.

15. Sicherheitsmodul nach Anspruch 10, das Paritätserzeuger (7,8), die mit den Speichermitteln zusammenarbeiten, Paritätserzeuger (11), die mit dem Bearbeitungsmittel zusammenarbeiten, sowie einen Komparator aufweist, der mit jedem der Paritätserzeuger verbunden, und in der Lage ist, eine Unterbrechung innerhalb der Bearbeitungsmittel herbeizuführen.

16. Sicherheitsmodul nach Anspruch 15, bei welchem die Paritätserzeuger (7,8) einen sich in der Zeit ändernden Betrieb haben.

17. Sicherheitsmodul nach Anspruch 15, bei welchem die Paritätserzeuger (7,8) einen sich zufällig ändernden Betrieb haben.

18. Sicherheitsmodul nach Anspruch 14, **dadurch gekennzeichnet, dass** das unumkehrbare Schreiben des Anzeigers in die Speichermittel (32,33) durch Ausführung eines mikroprogrammierten Befehls durchgeführt wird.

19. Sicherheitsmodul nach Anspruch 10, **dadurch gekennzeichnet, dass** das Sicherheitsmodul eine Mikroschaltungskarte ist.
